# EUROPEAN PATENT APPLICATION

(11) **EP 4 422 339 A1**
(43) Date of publication of application: **28.08.2024**
(21) Application number: 22882691.3
(22) Date of filing: 11.10.2022
(51) Int. Cl.: H04W 76/27, H04W 4/06

(54) **METHOD AND APPARATUS FOR SENDING AND RECEIVING MULTICAST SERVICE IN INACTIVE STATE**

(30) Priority: 19.10.2021 CN 202111217425
(71) Applicant: Spreadtrum Communications (Shanghai) Co., Ltd., Shanghai 201203 (CN)
(72) Inventor: DENG, Yun, Shanghai 201203 (CN)
(74) Representative: Nordmeyer, Philipp Werner
(86) International application number: PCT/CN2022/124552
(87) International publication number: WO 2023/066081

(57) **Abstract**

A method and apparatus for sending and receiving a multicast service in an inactive state. The method for sending a multicast service in an inactive state comprises: sending first indication information and/or second indication information, the first indication information indicating that a multicast service is received in an inactive state, and the second indication information indicating a condition that needs to be satisfied when the multicast service is received in the inactive state; and sending data of the multicast service. A technical solution of the present invention can achieve determination of a multicast service transmitted in an inactive state.

## Description

### CROSS-REFERENCE TO RELATED APPLICATIONS

This application claims priority to Chinese Patent Application No. 202111217425.4, filed on October 19, 2021, and entitled "METHOD AND APPARATUS FOR SENDING MULTICAST SERVICE IN INACTIVE STATE, AND METHOD AND APPARATUS FOR RECEIVING MULTICAST SERVICE IN INACTIVE STATE", the entire disclosure of which is incorporated herein by reference.

### TECHNICAL FIELD

The present disclosure generally relates to communication technology field, and more particularly, to a method and apparatus for sending a multicast service in an inactive state, and a method and apparatus for receiving a multicast service in an inactive state.

### BACKGROUND

A Multimedia Broadcast Multicast Service (MBMS) function will be introduced in New Radio (NR) systems. In current releases, as a multicast service has strict service quality requirements, a User Equipment (UE) needs to receive the multicast service in a connected state. The UE in the connected state needs to perform a network-configured measurement task and report a measurement report when a measurement reporting condition is met. A network also configures the UE to perform physical layer (i.e., Layer 1, L1 for short) measurements and report channel state information, etc. Therefore, the UE in the connected state needs to maintain a large signaling overhead, which is not only detrimental to power consumption of the UE, but also significantly increases a load on the network.

To reduce the signaling overhead of the UE and the load on the network, it is considered that transmission of the multicast service is supported in an inactive state.

However, if it is necessary to receive the multicast service in the inactive state, a problem that needs to be solved is how the UE determines whether it can receive the multicast service in the inactive state.

### SUMMARY

Embodiments of the present disclosure realize determination of transmission of a multicast service in an inactive state.

In a first aspect of the present disclosure, a method for sending a multicast service in an inactive state is provided, including: sending at least one of first indication information and second indication information, where the first indication information indicates receiving the multicast service in the inactive state, and the second indication information indicates a condition that requires to be met to receive the multicast service in the inactive state; and sending data of the multicast service.

Optionally, the first indication information has a correspondence with an identifier of at least one type of multicast service, and the second indication information has a correspondence with an identifier of at least one type of multicast service.

Optionally, said sending the first indication information includes: sending the first indication information carried in a Radio Resource Control (RRC) release signaling.

Optionally, said sending the second indication information includes: sending the second indication information carried in an RRC signaling.

Optionally, said sending at least one of the first indication information and the second indication information includes: for a terminal device that receives the multicast service and is in a connected state, sending the first indication information or the second indication information in response to no multicast service and unicast service being within a time period of a preset duration.

Optionally, said sending the first indication information includes: sending the first indication information carried in paging.

Optionally, said sending the first indication information includes: for a terminal device in the inactive state, sending the first indication information carried in paging in response to there being data of the multicast service that needs to be transmitted, where the paging further includes an identifier of the multicast service.

Optionally, the second indication information includes one or more of following conditions: being in a serving cell where the multicast service can be received; being in a serving cell where the first indication information or the second indication information is received; a signal quality threshold for reception of the multicast service; being in a serving cell, an uplink timing advance timer having not expired, and one or more configured grant being valid; being in a serving cell, the uplink timing advance timer having not expired, and the serving cell configuring uplink resources for transmitting a Hybrid Automatic Repeat reQuest (HARQ) feedback.

In a second aspect of the present disclosure, a method for receiving a multicast service in an inactive state is provided, including: receiving at least one of first indication information and second indication information, where the first indication information indicates receiving the multicast service in the inactive state, and the second indication information indicates a condition that requires to be met to receive the multicast service in the inactive state; and receiving data of the multicast service in the inactive state.

Optionally, based on that the first indication information has been received, the condition that required to be met to receive the multicast service in the inactive state is preset by a standard.

Optionally, said receiving the first indication information includes: receiving an RRC release signaling, where the RRC release signaling includes the first indication information.

Optionally, receiving the second indication information includes: receiving an RRC signaling in a connected state, where the RRC signaling includes the second indication information.

Optionally, following receiving at least one of the first indication information and the second indication information, the method further includes: entering the inactive state; and saving parameter configuration for reception of the multicast service acquired during the connected state.

Optionally, said receiving the first indication information includes: receiving paging in the inactive state, where the paging includes the first indication information.

Optionally, said receiving the data of the multicast service in the inactive state includes: receiving the data of the multicast service following receiving paging or update information indicating data transmission of the multicast service in response to the first indication information being received; determining whether the condition indicated by the second indication information is met in response to the second indication information being received, and receiving the data of the multicast service after the condition is met and paging or update information indicating data transmission of the multicast service is received; or determining whether the condition is met, in response to only the first indication information being received and the condition that requires to be met to receive the multicast service in the inactive state being preset by a standard, and receiving the data of the multicast service after the condition is met and paging or update information indicating data transmission of the multicast service is received.

In a third aspect of the present disclosure, an apparatus for sending a multicast service in an inactive state is provided, including: an indication information sending circuitry configured to send at least one of first indication information and second indication information, where the first indication information indicates receiving the multicast service in the inactive state, and the second indication information indicates a condition that requires to be met to receive the multicast service in the inactive state; and a data sending circuitry configured to send data of the multicast service.

In a fourth aspect of the present disclosure, an apparatus for receiving a multicast service in an inactive state is provided, including: an indication information receiving circuitry configured to receive at least one of first indication information and second indication information, where the first indication information indicates receiving the multicast service in the inactive state, and the second indication information indicates a condition that requires to be met to receive the multicast service in the inactive state; and a data receiving circuitry configured to receive data of the multicast service in the inactive state.

In a fifth aspect of the present disclosure, a computer readable storage medium having computer instructions stored therein is provided, where when the computer instructions are executed by a processor, any one of the above methods is performed.

In a sixth aspect of the present disclosure, a network device which includes a memory and a processor is provided, where the memory has computer instructions stored therein, and when the processor executes the computer instructions, the method for sending the multicast service in the inactive state is performed.

In a seventh aspect of the present disclosure, a terminal device which includes a memory and a processor is provided, where the memory has computer instructions stored therein, and when the processor executes the computer instructions, the method for receiving the multicast service in the inactive state is performed.

In an eighth aspect of the present disclosure, a method for transmitting a multicast service in an inactive state is provided, including: receiving a preamble sent by a terminal device in an inactive state; determining information of a first beam based on a reception occasion of the preamble; and sending data of the multicast service on the first beam.

Optionally, prior to sending the data of the multicast service on the first beam, the method further includes: determining the multicast service that the terminal device is interested in.

Optionally, determining the multicast service that the terminal device is interested in includes: determining the multicast service that the terminal device is interested in based on the preamble.

Optionally, each multicast service is configured with a dedicated preamble.

Optionally, determining the multicast service that the terminal device is interested in includes: receiving message 3, where the message 3 includes an identifier of the multicast service that the terminal device is interested in.

Optionally, prior to receiving the preamble sent by the terminal device using the first beam it is currently in, the method further includes: indicating to the terminal device information about a beam used to transmit the multicast service, so that the terminal device sends the preamble in response to determining that the beam it is in is different from the beam used to transmit the multicast service.

In a ninth aspect of the present disclosure, a method for transmitting a multicast service in an inactive state is provided, including: in response to being in the inactive state, sending a preamble based on a first beam currently located, where a reception occasion of the preamble can be used to determine information of the first beam; and receiving data of the multicast service on the first beam.

Optionally, following sending the preamble based on the first beam currently located, the method further includes: sending a service identifier of the multicast service.

Optionally, said sending the service identifier includes: sending message 3 which includes the service identifier.

Optionally, each multicast service is configured with a dedicated preamble.

Optionally, sending the preamble based on the first beam currently located includes: sending message 1 based on the first beam, where the message 1 includes the preamble.

In a tenth aspect of the present disclosure, an apparatus for transmitting a multicast service in an inactive state is provided, including: a preamble receiving circuitry configured to receive a preamble sent by a terminal device in an inactive state; a beam information determining circuitry configured to determine information of a first beam based on a reception occasion of the preamble; and a sending circuitry configured to send data of the multicast service on the first beam.

In an eleventh aspect of the present disclosure, an apparatus for transmitting a multicast service in an inactive state is provided, including: a preamble sending circuitry configured to: in response to being in the inactive state, send a preamble based on a first beam currently located, where a reception occasion of the preamble can be used to determine information of the first beam; and a receiving circuitry configured to receive data of the multicast service on the first beam.

Embodiments of the present disclosure may provide following advantages.

In the embodiments of the present disclosure, the network device may send the first indication information to the terminal device, and the terminal device receives the data of the multicast service in the inactive state based on indication of the first indication information. Alternatively, the network device may send the second indication information to the terminal device, and the terminal device determines whether it can receive the data of the multicast service in the inactive state based on the condition indicated by the second indication information. By setting the first indication information and the second indication information, the terminal device is enabled to receive the data of the multicast service in the inactive state and realize transmission of the multicast service in the inactive state, thereby reducing signaling overhead of the terminal device and a load on the network device.

Further, for the terminal device that receives the multicast service and is in the connected state, in response to there being no multicast service and unicast service within a time period of a preset time period, the first indication information and/or the second instruction information is sent. In the embodiments of the present disclosure, the network device may notify the terminal device in the connected state to release an RRC connection through the RRC release signaling, and at the same time notify the terminal device to continue receiving the data of the multicast service after entering the inactive state. Flexibility of indication is achieved through multiplexing signaling without additional signaling, which may further reduce the signaling overhead.

Further, for the terminal device in the inactive state, in response to there being data of the multicast service that needs to be transmitted, the first indication information is carried in a paging and sent out, and the paging also includes the identifier of the multicast service. In the embodiments of the present disclosure, when indicating through the paging that the data of the multicast service is to be transmitted, the network device also indicates to the terminal device that it can receive the data of the multicast service in the inactive state, thereby realizing flexibility of indication.

### BRIEF DESCRIPTION OF THE DRAWINGS

FIG. 1 is a flow chart of a method for sending a multicast service in an inactive state according to an embodiment;
FIG. 2 is an interactive flow chart of transmission of a multicast service in an inactive state according to an embodiment;
FIG. 3 is an interactive flow chart of transmission of a multicast service in an inactive state according to an embodiment;
FIG. 4 is a flow chart of a method for transmitting a multicast service in an inactive state according to an embodiment;
FIG. 5 is an interactive flow chart of a method for transmitting a multicast service in an inactive state according to an embodiment;
FIG. 6 is an interactive flow chart of a method for transmitting a multicast service in an inactive state according to an embodiment;
FIG. 7 is a block diagram of an apparatus for sending a multicast service in an inactive state according to an embodiment;
FIG. 8 is a block diagram of an apparatus for receiving a multicast service in an inactive state according to an embodiment; and
FIG. 9 is a diagram of hardware structures of a communication apparatus according to an embodiment.

### DETAILED DESCRIPTION

Communication systems applicable to embodiments of the present disclosure include but are not limited to Long Term Evolution (LTE) systems, 5th-generation (5G) systems, New Radio (NR) systems, and future evolution systems or a fusion system of various communications. The 5G system may be a non-standalone (NSA) 5G system or a standalone (SA) 5G system. The technical solutions of the present disclosure also may be applied to different network architectures, including but not limited to a relay network architecture, a dual-connectivity architecture, and a vehicle-to-everything architecture.

The present disclosure mainly relates to communication between a terminal device and a network device.

The network device in the embodiments of the present disclosure may also be referred to as an access network device, such as a base station (also called a base station equipment), and is a device deployed in a Radio Access Network (RAN) to provide radio communication functions. For example, an equipment that provides a base station function in a 2G network includes a Base Transceiver Station (BTS) and a Base Station Controller (BSC). An equipment that provides the base station function in a 3G network includes a Node B. An equipment that provides the base station function in a 4G network includes an evolved Node B (eNB). In a Wireless Local Area Network (WLAN), an equipment that provides the base station function is an Access Point (AP). An equipment that provides the base station function in a 5G New Radio (NR) includes gNB and a continuously evolved Node B (ng-eNB), where gNB and the terminal use NR technology for communication, ng-eNB and the terminal use Evolved Universal Terrestrial Radio Access (E-UTRA) technology for communication, and both gNB and ng-eNB can be connected to a 5G core network. And the base station also refers to an equipment that provides the base station function in a new communication system in the future.

The terminal device in the embodiments of the present disclosure may refer to various forms of access terminal, user unit, user station, Mobile Station (MS), remote station, remote terminal, mobile equipment, user terminal, wireless communication equipment, user agent or user device. The terminal device may further be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modems, an in-vehicle device, a wearable device, a terminal equipment in the future 5G network, or a terminal equipment in a future evolved Public Land Mobile Network (PLMN), which is not limited in the embodiments of the present disclosure. The terminal device may also be referred to as a UE or a terminal.

As described in the background, in current releases, the network device will notify the terminal device that the multicast service is about to start transmission. After the terminal device in the idle state or the inactive state receives the paging, if it is interested in the multicast service, the terminal device needs to switch to a connected state to receive the multicast service. If the terminal device can receive the multicast service in the inactive state, the terminal device in the inactive state needs to determine whether it can receive the multicast service in the current state.

In embodiments of the present disclosure, by setting first indication information and second indication information, a terminal device is enabled to receive data of a multicast service in an inactive state and realize transmission of the multicast service in the inactive state, thereby reducing signaling overhead of the terminal device and a load on a network device.

Another problem that needs to be solved when transmitting the multicast service in the inactive state is that once a terminal device in the inactive state is allowed to receive the multicast service, the network device may not know on which beam the multicast service is sent. In the current releases, when the terminal device in the connected state receives a multicast service, the network device can learn on which beam the multicast service is transmitted through information reported by the terminal device at layer 1 or layer 3. However, for the terminal device in the inactive state, it is difficult for the network device to track a beam which serves the terminal device in time. Therefore, it is necessary to determine the beam on which the multicast service is transmitted so that the terminal device in the inactive state can receive the multicast service.

In order to clarify the objects, characteristics and advantages of the disclosure, embodiments of present disclosure will be described in detail in conjunction with accompanying drawings.

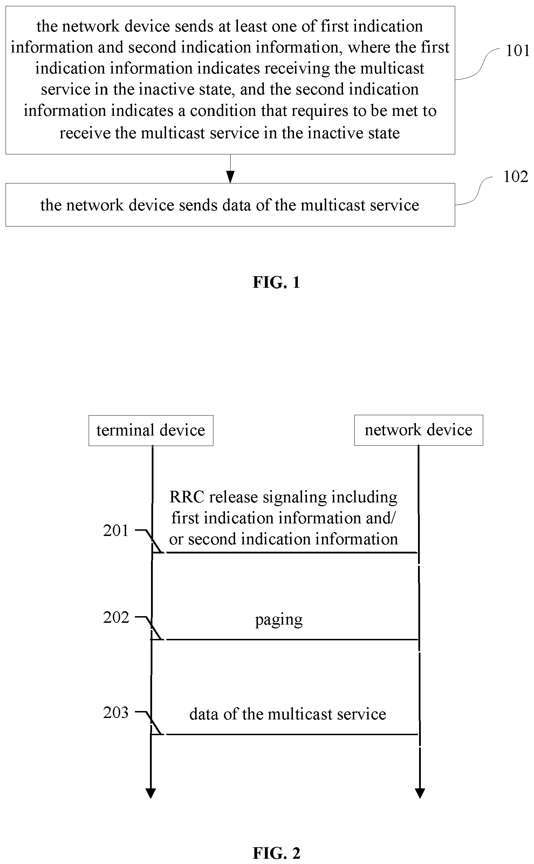

FIG. 1 is a flow chart of a method for sending a multicast service in an inactive state according to an embodiment.

The method may be applied to a network device, that is, the network device may perform each step of the method.

Specifically, the method includes 101 and 102.

In 101, the network device sends at least one of first indication information and second indication information, where the first indication information indicates receiving the multicast service in the inactive state, and the second indication information indicates a condition that requires to be met to receive the multicast service in the inactive state.

In 102, the network device sends data of the multicast service.

It should be noted that sequence numbers of steps in the embodiments do not represent a limitation on an execution order of the steps.

In some embodiments, the first indication information may directly indicate whether the terminal device can receive the multicast service in the inactive state, and the second indication information indirectly indicates whether the terminal device can receive the multicast service in the inactive state through the condition. The network device may send the first indication information to the terminal device, and the terminal device receives the data of the multicast service in the inactive state based on indication of the first indication information. The network device may send the second indication information to the terminal device, and the terminal device determines whether it can receive the data of the multicast service in the inactive state based on the condition indicated by the second indication information.

Accordingly, the terminal device receives the first indication information and/or the second indication information. If determining that it can receive the data of the multicast service in the inactive state, the terminal device receives the data of the multicast service in the inactive state.

Further, the second indication information may include some or all parameters relevant with the condition for the terminal device to receive the multicast service in the inactive state.

It could be understood that in specific implementation, the method may be implemented in a form of software program which runs in a processor integrated within a chip or chip module. Alternatively, the method may be implemented using a combination of software and hardware, which is not limited in the present disclosure.

In some embodiments, the network device carries the first indication information in an RRC release signaling and sends it to the terminal device.

Referring to FIG. 2, FIG. 2 illustrates interaction between a terminal device and a network device according to an embodiment.

In 201, the network device sends an RRC release signaling to the terminal device. The RRC release signaling includes first indication information and/or second indication information. After receiving the RRC release signaling, the terminal device releases a connection and enters an inactive state, and determines that it can receive a multicast service in an inactive state through the first indication information and/or the second indication information in the RRC release signaling.

Specifically, the terminal device is in a connected state and receiving the multicast service. However, the network device finds that there is no data transmission of the multicast service and no other multicast services and unicast services within a preset time period, then the network device sends the above-mentioned RRC release signaling.

In 202, the network device sends paging to the terminal device.

Specifically, when data of the multicast service needs to be transmitted, the network device notifies the terminal device of data transmission of the multicast service through paging.

In 203, the network device sends the data of the multicast service to the terminal device.

Specifically, the terminal device uses previously saved configuration parameters of the multicast service, such as search space configuration and other parameters, to receive the data of the multicast service in the inactive state.

In some embodiments, the second indication information may be carried in an RRC signaling and sent out. The RRC signaling may be an RRC release signaling or any other implementable RRC signaling, which is not limited in the embodiments of the present disclosure.

In some embodiments, the network device carries the first indication information in paging and sends it to the terminal device.

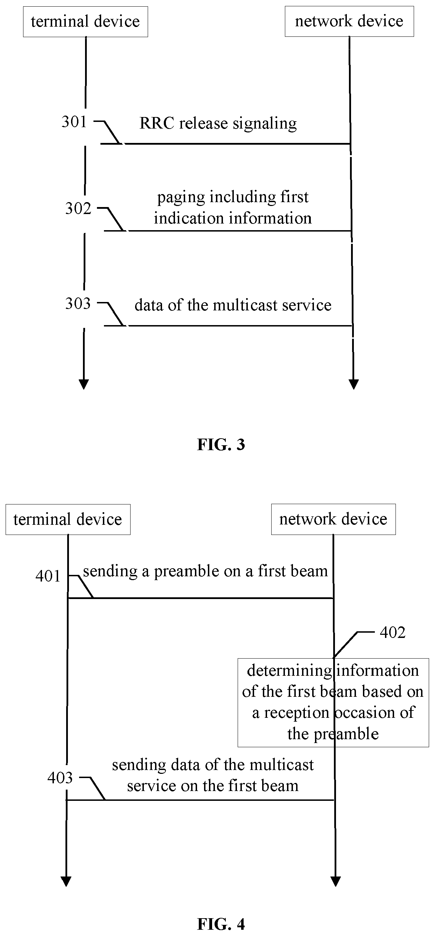

Referring to FIG. 3, FIG. 3 illustrates interaction between a terminal device and a network device according to an embodiment.

In 301, the network device sends an RRC release signaling to the terminal device.

Specifically, the terminal device is in a connected state and is receiving the multicast service. When there is no data transmission of the multicast service in a serving cell, for example, there is no data transmission of the multicast service and no other multicast services and unicast services within a preset time period, an RRC release signaling is sent, to make the terminal device switch from the connected state to the inactive state, thereby reducing a load on the network device.

In 302, the network device sends paging to the terminal device. The paging includes first indication information.

Specifically, when data of the multicast service data needs to be transmitted, the network device notifies the terminal device of data transmission of the multicast service through paging, and at the same time indicates in the paging that the terminal device can receive the data of the multicast service in the inactive state.

In 303, the network device sends the data of the multicast service to the terminal device.

Specifically, the terminal device uses previously saved configuration parameters of the multicast service, such as search space configuration and other parameters, to receive the data of the multicast service in the inactive state.

In some embodiments, the first indication information has a correspondence with an identifier of at least one multicast service, and the second indication information has a correspondence with an identifier of at least one multicast service.

In some embodiments, as there are multiple types of multicast services, whether the multicast service can be received in the inactive state may be independently indicated for each type of multicast service. Specifically, the first indication information may be associated with the identifier of the at least one multicast service. The first indication information may correspond to the identifier of one multicast service or identifiers of multiple multicast services. Similarly, the second indication information may correspond to the identifier of one multicast service or the identifiers of multiple multicast services.

Specifically, the paging includes the identifiers of multiple multicast services. Accordingly, when the first indication information is carried in paging, the first indication information may include multiple bit values each of which corresponds to an identifier of one multicast service. In some embodiments, the identifiers of the multicast services may be in a form of list, and the first indication information may also be in a form of list. Content of corresponding positions of the two lists have a correspondence (mapping), so that the terminal device can learn which multicast service can be received in the inactive state based on the correspondence (mapping).

In some embodiments, the second indication information includes one or more of followings: being in a serving cell where the multicast service can be received; being in a serving cell where the first indication information or the second indication information is received; being in one or more beams of the serving cell, and at least one of the one or more beams having signal quality reaching a preset threshold; being in a serving cell, an uplink timing advance timer having not expired, and one or more configured grants being valid; being in a serving cell, the uplink timing advance timer having not expired, and the serving cell configuring uplink resources for transmitting a HARQ feedback.

In some embodiments, the second indication information may directly indicate specific content of the condition, or may include some or all parameters relevant with the condition. For example, for being in one or more beams of the serving cell, and at least one of the one or more beams having signal quality reaching the preset threshold, the second indication information may indicate one or more beam identifiers, and indicate the preset threshold (that is, a signal quality threshold for reception of the multicast services). For the uplink timing advance timer having not expired, and one or more configured grants being valid, the second indication information may indicate a duration of the uplink timing advance timer and the one or more configured grants. For the uplink timing advance timer having not expired, and the serving cell configuring uplink resources for transmitting the HARQ feedback, the second indication information may indicate a duration of the uplink timing advance timer and the configured uplink resources. After acquiring some or all parameters relevant with the condition, the terminal device can determine specific content of the condition and determine whether the condition is met.

The condition that the signal quality of at least one beam reaches the preset threshold can ensure that the terminal device reliably receives the data of the multicast service in the inactive state. The condition that the uplink timing advance timer has not expired can ensure that the terminal device is in a prerequisite for uplink feedback, and the condition that one or more configured grants are valid can ensure that the terminal device has uplink resources available for uplink feedback. Similarly, the condition that the serving cell configures uplink resources for transmitting a HARQ feedback can ensure that the terminal device has the uplink resources available for uplink feedback. The uplink resources may be Physical Uplink Control Channel (PUCCH) resources.

In some embodiments, after entering the inactive state, the terminal device determines whether it can receive the multicast service in the inactive state based on a criterion configured by the network device (i.e., the second indication information). When the serving cell resumes transmitting data of the multicast service, if determining that it can receive the multicast service in the inactive state, the terminal device remains in the inactive state and uses saved parameters such as a search space corresponding to a downlink control signaling for detecting the multicast service to receive the data of the multicast service. If the terminal device determines that the criterion is not met, for example, the terminal device finds that signal quality of multiple beams configured in the serving cell is lower than the preset threshold, or the configured grant configured in the serving cell is no longer valid, etc., the terminal device may not receive the data of the multicast service in the inactive state. If the terminal device is still interested in the multicast service at this time, the terminal device needs to initiate an RRC connection establishment or resume procedure. After entering the connected state, the terminal device waits for reconfiguration of the serving cell before receiving the data of the multicast service.

In a specific application scenario, an NR cell supports multicast service. The NR cell may transmit multicast services to terminal devices in different states in the cell, such as RRC connected state or inactive state (can be extended to idle state). Within a period of time, the NR cell needs to transmit three types of multicast services, which are called session 1, session 2 and session 3 respectively. Based on service quality parameters of different sessions, the NR cell believes that Session 1 can be received by a terminal device in the connected state or in the inactive state, while the other two sessions (session 2 and session 3) need to be received by a terminal device in the connected state.

In some embodiments, the network device configures receiving the multicast service in the inactive state through an RRC release signaling (i.e., the first indication information) according to a session. For example, for a terminal device UE1 in a connected state that is receiving Session 1, if the serving cell finds that there is no transmission of data for Session 1 within a period of time, and UE1 has no other multicast services and unicast services, the network device may release an RRC connection of UE1 via an RRC release signaling, notifies UE1 to enter the inactive state, and indicates in the signaling that Session 1 can be received in the inactive state.

After entering the inactive state, UE1 saves relevant configuration of receiving Session 1 acquired in the connected state, such as parameters including a search space corresponding to a downlink control signaling detecting the multicast service. After a while, the network device acquires data of new Session 1 from a core network. The network device instructs the terminal device interested in Session 1 to receive multicast data through paging or update information of the multicast service (which may be group activation notification indication or a Multimedia Broadcast Multicast Service (MBMS) Control Channel (MCCH) change notification). After receiving the instruction, UE1 uses the saved parameters including the search space for detecting the multicast service to receive Session 1 in the inactive state.

In some embodiments, the network device uses an RRC signaling to configure a criterion for receiving the multicast service in the inactive state (i.e., the second indication information), and the terminal device determines whether to receive the multicast service in the inactive state based on the criterion.

For example, for a terminal device UE2 in a connected state that is receiving Session 1, if the serving cell finds that there is no data transmission for Session 1 within a period of time, and UE2 has no other multicast services and unicast services, the serving cell may release an RRC connection of UE2 via an RRC release signaling, notifies UE2 to enter the inactive state, and indicates in the signaling a criterion that Session 1 can be received in the inactive state. The criterion may include one or more of followings.
1. UE2 continues to be within the serving cell (i.e., the serving cell sending the criterion), or
2. UE2 is under one or more beams configured by the serving cell, and UE2 detects that any one (at least one) of the multiple beams needs to exceed a preset threshold (i.e., the signal quality threshold). For example, if the serving cell configures beams according to SSB, SSB1 and SSB2 are configured, and the preset threshold is configured. As long as UE2 measures that at least one of SSB1 or SSB2 exceeds the preset threshold, it is considered that the criterion is met, or
3. UE2 is within the serving cell, an uplink timing advance timer (Timing Advance Timer) has not expired, and one or more configured grants are valid. UE2 can upload necessary information through the configured grants, such as HARQ ACK/NACK for receiving multicast data, or channel state information of beams measured by UE2, or
4. UE2 is within the serving cell, the uplink timing advance timer has not expired, and the serving cell has configured for UE2 a PUCCH resource for transmitting a HARQ feedback.

After entering the inactive state, UE2 determines whether it can receive Session 1 in the inactive state based on the criterion configured by the network device. When the serving cell restarts transmitting data of Session 1, if UE2 determines that it can receive Session 1 in the inactive state, UE2 remains in the inactive state and uses the saved parameters including the search space corresponding to the downlink control signaling for detecting the multicast service to receive scheduling information and data of Session 1. If UE2 determines that the criterion is not met, for example, UE2 finds that signal quality of multiple beams configured in the serving cell is lower than the preset threshold, or the configured grant configured in the serving cell is no longer valid, etc., UE2 may not receive the data of Session 1 in the inactive state. If UE2 is still interested in Session 1 at this time, UE2 needs to initiate an RRC connection establishment or resume procedure. After entering the connected state, UE2 waits for reconfiguration of the serving cell, and then receives the data of Session 1.

In some embodiments, when there is no multicast data transmission in the serving cell, the terminal device that is originally in the connected state and receives the multicast data may switch to the inactive state. After a period of time, if multicast data is transmitted, the serving cell notifies the terminal device through paging that Session 1 has data transmission, and at the same time, the serving cell indicates in the paging that it can receive the data of Session 1 in the inactive state.

For the terminal device that switches to the inactive state, the previously saved configuration of receiving Session 1, such as search space configuration and other parameters, is used to receive the data of Session 1.

In some embodiments, the serving cell notifies the terminal device to receive the multicast service in the inactive state through the first indication information. The condition (i.e., the criterion) that the terminal device needs to meet to receive the multicast service in the inactive state is preset by a standard or protocol. If the terminal device in the inactive state continues to be interested in the multicast service, it needs to determine whether the condition is met. After the condition is met and the paging or update information indicating data transmission of the multicast service is ongoing, the terminal device receives the data of the multicast service. The condition that requires to be met to receive the multicast service in the inactive state includes one or more of followings.
1. UE continues to be within the serving cell (i.e., the serving cell sending the first indication information), or
2. UE is under one or more beams configured by the serving cell, and UE detects that any one (at least one) of the multiple beams exceeds a preset threshold. For example, if the serving cell configures beams according to SSB, SSB1 and SSB2 are configured, and the preset threshold is configured. As long as UE measures that at least one of SSB1 or SSB2 exceeds the preset threshold, it is considered that the criterion is met, or
3. UE is within the serving cell, an uplink timing advance timer (Timing Advance Timer) has not expired, and one or more configured grants are valid. UE can upload necessary information through the configured grants, such as HARQ ACK/NACK for receiving multicast data, or channel state information of beams measured by UE, or
4. UE is within the serving cell, the uplink timing advance timer has not expired, and the serving cell has configured for UE a PUCCH resource for transmitting a HARQ feedback.

An embodiment of the present disclosure further discloses a method for transmitting a multicast service in an inactive state. A terminal device in the embodiment is in the inactive state.

Specifically, referring to FIG. 4, the method may include 401, 402 and 403.

The terminal device first learns service identifiers of multicast services that can be received in the inactive state as well as preamble information corresponding to each multicast service through system information or MCCH of the serving cell. The UE that expects to receive the multicast services in the inactive state, based on the preamble corresponding to the multicast service of interest, makes the network device learn a beam position where the UE is located through a random access procedure. The network device can send multicast data in the corresponding beam to avoid sending the multicast data on all beams, thereby effectively saving wireless transmission resources.

In 401, the terminal device sends a preamble at a random access occasion (RACH Occasion) corresponding to a first beam. The terminal device is on the first beam, that is, the terminal device uses the first beam to send and receive data. Accordingly, the network device receives the preamble.

In 402, the network device determines information of the first beam based on a reception occasion of the preamble. Specifically, the network device may determine an identifier of the first beam.

In 403, the network device sends data of the multicast service on the first beam. That is, after learning through the preamble that the terminal device sends and receives data on the first beam, the network device may send data of the multicast service to the terminal device through the first beam to achieve reliable transmission of the multicast service. Accordingly, the terminal device receives the data of the multicast service.

Embodiments of the present disclosure enable the network device to learn on which beams the multicast service is sent. That is, the network device can learn the distribution of terminal devices in the inactive state in a cell, and on which beams the terminal device receives the data of the multicast service, so that the data of the multicast service can be correctly transmitted to the terminal device in the inactive state.

In some embodiments, the preamble may be sent and received via Message 1 (Msg1).

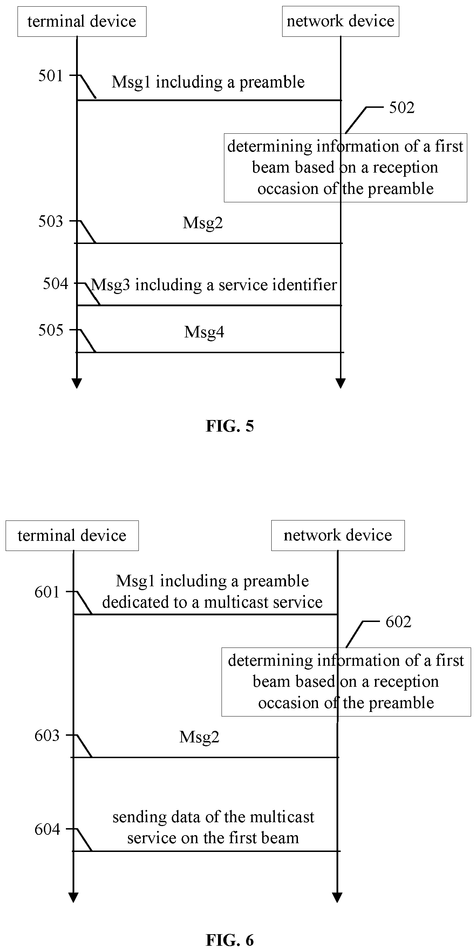

In some embodiments, referring to FIG. 5, an interaction process between the terminal device and the network device is as follows.

In 501, the terminal device sends Msg1 to the network device, and Msg1 includes a preamble. The preamble may be a common preamble with a form and content specified in communication standards.

In 502, the network device determines information of a first beam based on a reception occasion of the preamble.

In 503, the network device sends Msg2 to the terminal device. Msg2 may be a response message to Msg1, specifically a random access response.

In 504, the terminal device sends Msg3 to the network device, where Msg3 includes a service identifier of a multicast service that the terminal device is interested in.

In 505, the network device sends Msg4 to the terminal device. Msg4 may be a response message to Msg3, specifically an acknowledgment message (ACK) or a conflict resolution message.

Therefore, the network device can learn an identifier of the first beam used by the terminal device to receive multicast data, and the service identifier of the multicast service that the terminal device is interested in. Accordingly, the network device can send the data of the multicast service pointed by the service identifier to the terminal device on the first beam.

In some embodiments, referring to FIG. 6, an interaction process between the terminal device and the network device is as follows.

In 601, the terminal device sends Msg1 to the network device, and Msg1 includes a preamble dedicated to a multicast service. Specifically, the network device may assign a specific preamble in an MCCH for the terminal device requesting transmission of the multicast service, such as assigning a dedicated preamble for request of Session 1.

In 602, the network device determines information of a first beam based on a reception occasion of the preamble. Further, the network device may also determine a service identifier of the multicast service corresponding to the preamble.

In 603, the network device sends Msg2 to the terminal device. Msg2 may be a response message to Msg1, specifically a random access response.

In 604, the network device sends data of the multicast service on the first beam.

Compared with the foregoing embodiments, in this embodiment, by setting a dedicated preamble for the multicast service, the network device can acquire required information only via interaction of Msg1 and Msg2 between the terminal device and the network device, thereby improving efficiency of interaction between the terminal device and the network device.

It should be noted that the terminal device can send the preamble multiple times to feed back beam information to the network device until data of the multicast service is received.

In some embodiments, NR is deployed at high frequencies, and wireless signals have the characteristics of good directionality and large path loss at high frequencies. Therefore, a cell with a large coverage area requires multiple beams to achieve complete coverage, while one beam can merely cover a limited range. A cell with a smaller coverage area may include one beam. For the cell composed of multiple beams, due to hardware limitations, not all beams can be transmitted simultaneously, and time division transmission is required, which is called beam sweeping. For a cell in NR, its synchronization signals (including primary synchronization signals and secondary synchronization signals) are transmitted according to a certain period, such as 5ms/10ms/20ms/40ms/80ms. A cell may transmit one or more SSBs (i.e., different beams), such as 4 SSBs or 8 SSBs. Within a period, these SSBs are distributed within 5ms. An SSB includes PSS/SSS and PBCH, where PSS and SSS are used to enable the terminal device to identify a cell identifier and to enable the terminal device to acquire symbol-level synchronization. For evaluating signal quality of a cell, the terminal device needs to combine measured N strongest beams of the cell to acquire the signal quality of the cell, where N is configured by a network, N>=1.

In a specific application scenario, the serving cell generally includes a total of 8 SSBs from SSB0 to SSB7. The serving cell determines that data of Session 1 needs to be transmitted at least in SSB2, SSB3 and SSB5 based on distribution of terminal devices currently in a connected state that need to receive Session 1. However, the serving cell does not learn distribution of terminal devices currently in an inactive state that need to receive Session 1 within the cell, that is, the serving cell does not know on which beams the terminal devices in the inactive state may receive multicast data.

In order to clarify on which beams besides SSB2, SSB3 and SSB5 data of Session 1 needs to be transmitted, the serving cell indicates in the MCCH information of the beams on which Session 1 will be transmitted (i.e. SSB2, SSB3 and SSB5). A terminal device in an inactive state that requires to be served by other beams needs to send feedback information to the serving cell to indicate on which beam it receives Session 1.

Specifically, the terminal device in the inactive state that can receive Session 1 at SSB2, SSB3 or SSB5 does not need to indicate any information to a base station, while the terminal device that cannot receive Session 1 on SSB2, SSB3 or SSB5 needs to indicate to the serving cell on which beam (or beams) it needs to receive Session 1. The terminal device may indicate on which beam (or beams) it needs to receive Session 1 through a random access procedure.

One method is that the terminal device sends a preamble through Msg1 and indicates an identifier of Session 1 to the serving cell through Msg3. The network device determines the SSB at which the terminal device needs to receive Session 1 from an occasion of the terminal device sending the preamble.

Another method is that the serving cell assigns a specific preamble (multicast service-specific preamble) in an MCCH to the terminal device requesting the multicast service, such as assigning a dedicated preamble for request of Session 1. Once the serving cell receives the preamble, it can determine at which SSB the terminal device needs to receive Session 1 from the occasion of the terminal device sending the preamble.

If the terminal device cannot receive Session 1 from a corresponding beam after multiple requests, the terminal device initiates an RRC connection/resume request to the network device, and after entering a connected state, requests the serving cell to send Session 1 to the terminal device. A threshold for number of failed requests may be set by the serving cell. When the number of failed requests is less than or equal to the threshold, the terminal device indicates to the network device the multicast service of interest and information of beams in which it is located through the above methods.

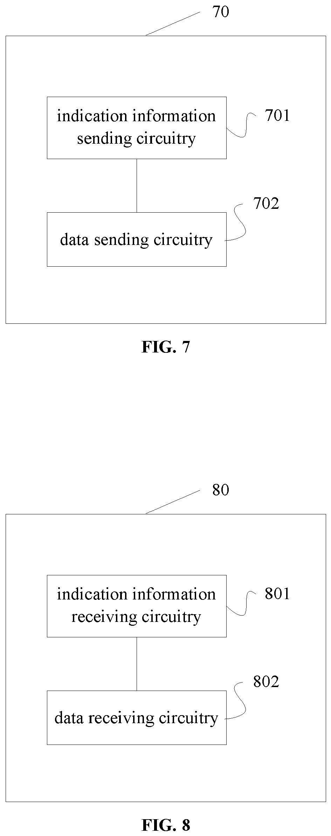

Referring to FIG. 7, FIG. 7 is a block diagram of an apparatus 70 for sending a multicast service in an inactive state according to an embodiment. The apparatus 70 includes: an indication information sending circuitry 701 configured to send at least one of first indication information and second indication information, where the first indication information indicates receiving the multicast service in the inactive state, and the second indication information indicates a condition that requires to be met to receive the multicast service in the inactive state; and a data sending circuitry 702 configured to send data of the multicast service.

In some embodiments, the apparatus 70 may correspond to a chip with a function of sending a multicast service in an inactive state in a network device, such as a System-On-Chip (SOC) or a baseband chip, or to a chip module including a chip with a function of sending a multicast service in an inactive state in the network device, or to a chip module including a chip with a data processing function, or to the network device.

Referring to FIG. 8, FIG. 8 is a block diagram of an apparatus 80 for receiving a multicast service in an inactive state according to an embodiment. The apparatus 80 includes: an indication information receiving circuitry 801 configured to receive at least one of first indication information and second indication information, where the first indication information indicates receiving the multicast service in the inactive state, and the second indication information indicates a condition that requires to be met to receive the multicast service in the inactive state; and a data receiving circuitry 802 configured to receive data of the multicast service in the inactive state.

In some embodiments, the apparatus 80 may correspond to a chip with a function of receiving a multicast service in an inactive state in a terminal device, such as an SOC or a baseband chip, or to a chip module including a chip with a function of sending a multicast service in an inactive state in the terminal device, or to a chip module including a chip with a data processing function, or to the terminal device.

More details of the apparatus 70 or the apparatus 80 can be referred to related descriptions in FIG. 1 to FIG. 6, and are not repeated here.

Each module/unit of each apparatus and product described in the above embodiments may be a software module/unit or a hardware module/unit, or may be a software module/unit in part, and a hardware module/unit in part. For example, for each apparatus or product applied to or integrated in a chip, each module/unit included therein may be implemented by hardware such as circuits; or, at least some modules/units may be implemented by a software program running on a processor integrated inside the chip, and the remaining (if any) part of the modules/units may be implemented by hardware such as circuits. For each apparatus or product applied to or integrated in a chip module, each module/unit included therein may be implemented by hardware such as circuits. Different modules/units may be disposed in a same component (such as a chip or a circuit module) or in different components of the chip module. Or at least some modules/units may be implemented by a software program running on a processor integrated inside the chip module, and the remaining (if any) part of the modules/units may be implemented by hardware such as circuits. For each apparatus or product applied to or integrated in a terminal, each module/unit included therein may be implemented by hardware such as circuits. Different modules/units may be disposed in a same component (such as a chip or a circuit module) or in different components of the terminal. Or at least some modules/units may be implemented by a software program running on a processor integrated inside the terminal, and the remaining (if any) part of the modules/units may be implemented by hardware such as circuits.

In an embodiment of the present disclosure, a computer readable storage medium having computer instructions stored therein is provided, where when the computer instructions are executed, the methods as shown in FIGS. 1 to 6 are performed. In some embodiments, the storage medium may include a ROM, a RAM, a magnetic disk or an optical disk. In some embodiments, the storage medium may include a non-volatile or a non-transitory memory.

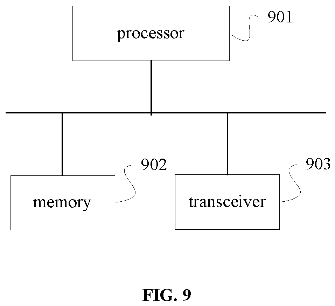

Referring to FIG. 9, FIG. 9 is a diagram of hardware structures of a communication apparatus according to an embodiment. The apparatus includes a processor 901, a memory 902 and a transceiver 903.

The processor 901 may be a general Central Processing Unit (CPU), a microprocessor, an Application-Specific Integrated Circuit (ASIC), or one or more integrated circuits used to control execution of a program of the present application. The processor 901 may include multiple CPUs, and may be a single-CPU processor or a multi-CPU processor. The processor here may refer to one or more devices, circuits or processing cores for processing data (e.g., computer program instructions).

The memory 902 may be ROM or other types of static storage devices that can store static information and instructions, RAM or other types of dynamic storage devices that can store information and instructions, Electrically Erasable Programmable Read-Only Memory (EEPROM), Compact Disc-Read Only Memory (CD-ROM) or other optical disc storage, optical disk storage (including compressed optical discs, laser discs, optical discs, digital versatile discs, Blu-ray discs, etc.), magnetic disk storage media or other magnetic storage devices, or any other medium that can be used to carry or store desired program codes in the form of instructions or data structures and can be accessed by a computer, which is not limited in the embodiments of the present disclosure. The memory 902 may exist independently (in this case, the memory 902 may be located outside the device or within the device), or may be integrated with the processor 901. The memory 902 may include computer program codes. The processor 901 is used to execute the computer program codes stored in the memory 902, thereby implementing the method provided in the embodiments of the present disclosure.

The processor 901, the memory 902 and the transceiver 903 are coupled through a bus. The transceiver 903 is used to communicate with other devices or communication networks. Optionally, the transceiver 903 may include a transmitter and a receiver. A device used to implement a receiving function in the transceiver 903 can be regarded as a receiver which is used to perform receiving steps in the embodiments of the present disclosure. A device used to implement a transmitting function in the transceiver 903 can be regarded as a transmitter which is used to perform transmitting steps in the embodiments of the present disclosure.

When the diagram shown in FIG. 9 is used to illustrate a structure of the terminal device involved in the above embodiments, the processor 901 is configured to control and manage actions of the terminal device. For example, the processor 901 is configured to support the terminal device to perform 501 and 504 in FIG. 5, or 601 in FIG. 6, and/or actions performed by the terminal device in other procedures described in the embodiments of the present disclosure. The processor 901 may communicate with other network entities through the transceiver 903, for example, with the network device described above. The memory 902 is configured to store program codes and data of the terminal device. When the processor runs the computer program, the transceiver 903 is controlled to receive an RRC release signaling, paging, multicast service data, Msg2, Msg4 and etc.

When the diagram shown in FIG. 9 is used to illustrate a structure of the network device involved in the above embodiments, the processor 901 is configured to control and manage actions of the network device. For example, the processor 901 is configured to support the network device to perform 101 and 102 in FIG. 1, 201, 202 and 203 in FIG. 2, 301, 302 and 303 in FIG. 3, 402 and 403 in FIG. 4, 502, 503 and 505 in FIG. 5, 602, 603 and 604 in FIG. 6, and/or actions performed by the network device in other procedures described in the embodiments of the present disclosure. The processor 901 may communicate with other network entities through the transceiver 903, for example, with the terminal device described above. The memory 902 is configured to store program codes and data of network devices. When the processor runs the computer program, the transceiver 903 is controlled to transmit one or more of RRC signaling, MAC signaling and DCI.

In the embodiments of the present disclosure, a unidirectional communication link from an access network to a terminal device is defined as a downlink, data transmitted on the downlink is downlink data, and a transmission direction of the downlink data is called a downlink direction. Besides, a unidirectional communication link from a terminal device to an access network is defined as an uplink, data transmitted on the uplink is uplink data, and a transmission direction of the uplink data is called an uplink direction.

In the embodiments of the present disclosure, a unidirectional communication link from an access network to a terminal is defined as a downlink, data transmitted on the downlink is downlink data, and a transmission direction of the downlink data is called a downlink direction. Besides, a unidirectional communication link from a terminal to an access network is defined as an uplink, data transmitted on the uplink is uplink data, and a transmission direction of the uplink data is called an uplink direction.

It should be understood that the term "and/or" in the present disclosure is merely an association relationship describing associated objects, indicating that there can be three types of relationships, for example, A and/or B can represent three situations including "A exists only", "both A and B exist", and "B exists only". In addition, the character "/" in the present disclosure represents that the former and latter associated objects have an "or" relationship.

The "plurality" in the embodiments of the present disclosure refers to two or more.

The descriptions of the first, second, etc. in the embodiments of the present disclosure are merely for illustrating and differentiating the objects, and do not represent the order or the particular limitation of the number of devices in the embodiments of the present disclosure, which do not constitute any limitation to the embodiments of the present disclosure.

The "connection" in the embodiments of the present disclosure refers to various connection ways such as direct connection or indirect connection to realize communication between devices, which is not limited in the embodiments of the present disclosure.

In the embodiments of the present disclosure, the processor may be a Central Processing Unit (CPU), or other general processors, Digital Signal Processors (DSPs), Application Specific Integrated Circuits (ASICs), Field Programmable Gate Arrays (FPGAs) or other Programmable logic devices, discrete gates or transistor logic devices, discrete hardware components, and the like. A general processor may be a microprocessor or the processor may be any conventional processor or the like.

It should also be understood that the memory in the embodiments of the present disclosure may be either volatile memory or nonvolatile memory, or may include both volatile and nonvolatile memories. The non-volatile memory may be a Read-Only Memory (ROM), a Programmable ROM (PROM), an Erasable PROM (EPROM), an electrically Erasable EPROM (EEPROM), or a flash memory. The volatile memory may be a Random Access Memory (RAM) which functions as an external cache. By way of example but not limitation, various forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced SDRAM (ESDRAM), Synchronous connection to DRAM (SLDRAM), and Direct Rambus RAM (DR-RAM).

The above embodiments may be implemented in whole or in part by software, hardware, firmware or any combination thereof. When implemented in software, the above embodiments may be implemented in whole or in part in the form of a computer program product. The computer program product includes one or more computer instructions or computer programs. The procedures or functions according to the embodiments of the present disclosure are wholly or partially generated when the computer instructions or the computer programs are loaded or executed on a computer. The computer may be a general-purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website, computer, server or data center to another website, computer, server or data center by wired or wireless means. The computer readable storage medium may be any available medium that a computer can access or a data storage device such as a server or a data center that includes a collection of one or more available media. The available media may be magnetic media (e.g., floppy disks, hard disks, magnetic tapes), optical media (e.g., Digital Video Discs (DVDs)), or semiconductor media which may be solid state disks.

It should be understood that, in the various embodiments of the present disclosure, sequence numbers of the above-mentioned processes do not represent an execution sequence, and the execution sequence of each process should be determined by its function and inherent logic, which does not limit an implementation process of the embodiments of the present disclosure.

In the above embodiments of the present disclosure, it should be understood that the disclosed method, device and system may be implemented in other ways. For example, the above device embodiments are merely illustrative, and for example, division of units is merely one logical division, and other divisions may be realized in practice, for example, a plurality of units or components may be combined or integrated into another system, or some features may be omitted, or not executed. Further, the shown or discussed mutual coupling or direct coupling or communication connection may be an indirect coupling or communication connection via some interfaces, devices or units, and may be in an electrical, mechanical or other form.

The units described as separate parts may or may not be physically separate, and parts shown as units may or may not be physical units, that is, may be disposed in one place, or may be distributed on a plurality of network units. Some or all of the units can be selected according to practical requirements to achieve the purpose of the solutions of the embodiments.

In addition, functional units in the embodiments of the present disclosure may be integrated in one processing unit, or each unit may be physically separate, or two or more units may be integrated in one unit. The integrated units can be realized in a form of hardware, or in a form of hardware plus a software functional unit.

The integrated units implemented in the form of the software functional unit may be stored in a computer readable storage medium. The software functional unit is stored in a storage medium and includes several instructions for causing a computer device (a personal computer, a server or a network device) to execute some steps of the methods in the embodiments of the present disclosure. And the storage medium may be a medium for storing program codes, such as a U disk, a removable hard disk, a ROM, a RAM, a magnetic disk or an optical disk.

Although the present disclosure has been disclosed above with reference to preferred embodiments thereof, it should be understood that the disclosure is presented by way of example only, and not limitation. Those skilled in the art can modify and vary the embodiments without departing from the spirit and scope of the present disclosure.

## Claims

1. A method for sending a multicast service in an inactive state, **characterized by** comprising:
sending at least one of first indication information and second indication information, wherein the first indication information indicates receiving the multicast service in the inactive state, and the second indication information indicates a condition that requires to be met to receive the multicast service in the inactive state; and
sending data of the multicast service.

2. The method according to claim 1, **characterized in that** the first indication information has a correspondence with an identifier of at least one type of multicast service, and the second indication information has a correspondence with an identifier of at least one type of multicast service.

3. The method according to claim 1, **characterized in that** said sending the first indication information comprises:
sending the first indication information carried in a Radio Resource Control (RRC) release signaling.

4. The method according to claim 1, **characterized in that** said sending the second indication information comprises:
sending the second indication information carried in an RRC signaling.

5. The method according to claim 3 or 4, **characterized in that** said sending at least one of the first indication information and the second indication information comprises:
for a terminal device that receives the multicast service and is in a connected state, sending the first indication information or the second indication information in response to no multicast service and unicast service being within a time period of a preset duration.

6. The method according to claim 1, **characterized in that** said sending the first indication information comprises:
sending the first indication information carried in paging.

7. The method according to claim 6, **characterized in that** said sending the first indication information comprises:
for a terminal device in the inactive state, sending the first indication information carried in paging in response to there being data of the multicast service that needs to be transmitted, wherein the paging further comprises an identifier of the multicast service.

8. The method according to claim 1, **characterized in that** the second indication information comprises one or more of following conditions:
being in a serving cell where the multicast service can be received;
being in a serving cell where the first indication information or the second indication information is received;
a signal quality threshold for reception of the multicast service;
being in a serving cell, an uplink timing advance timer having not expired, and one or more configured grant being valid;
being in a serving cell, the uplink timing advance timer having not expired, and the serving cell configuring uplink resources for transmitting a Hybrid Automatic Repeat reQuest (HARQ) feedback.

9. The method according to claim 1, **characterized in that** the second indication information comprises some or all parameters relevant with the condition.

10. The method according to claim 1, **characterized in that** said sending the data of the multicast service comprises:
receiving beam information indicated through MSG1 or MSG3 by a terminal device, and sending the data of the multicast service in the beam indicated by the beam information.

11. A method for receiving a multicast service in an inactive state, **characterized by** comprising:
receiving at least one of first indication information and second indication information, wherein the first indication information indicates receiving the multicast service in the inactive state, and the second indication information indicates a condition that requires to be met to receive the multicast service in the inactive state; and
receiving data of the multicast service in the inactive state.

12. The method according to claim 11, **characterized in that** based on that the first indication information has been received, the condition that required to be met to receive the multicast service in the inactive state is preset by a standard.

13. The method according to claim 11, **characterized in that** the first indication information configures whether to receive the multicast service in the inactive state based on an identifier of the multicast service.

14. The method according to claim 11, **characterized in that** said receiving the first indication information comprises:
receiving a Radio Resource Control (RRC) release signaling, wherein the RRC release signaling comprises the first indication information.

15. The method according to claim 11, **characterized in that** said receiving the second indication information comprises:
receiving an RRC signaling in a connected state, wherein the RRC signaling comprises the second indication information.

16. The method according to claim 13 or 14, **characterized in that** following receiving at least one of the first indication information and the second indication information, the method further comprises:
entering the inactive state; and
saving parameter configuration for reception of the multicast service acquired during the connected state.

17. The method according to claim 11, **characterized in that** said receiving the first indication information comprises:
receiving paging in the inactive state, wherein the paging comprises the first indication information.

18. The method according to claim 11, **characterized in that** said receiving the data of the multicast service in the inactive state comprises:
receiving the data of the multicast service following receiving paging or update information indicating data transmission of the multicast service in response to the first indication information being received;
determining whether the condition indicated by the second indication information is met in response to the second indication information being received, and receiving the data of the multicast service after the condition is met and paging or update information indicating data transmission of the multicast service is received; or
determining whether the condition is met, in response to only the first indication information being received and the condition that requires to be met to receive the multicast service in the inactive state being preset by a standard, and receiving the data of the multicast service after the condition is met and paging or update information indicating data transmission of the multicast service is received.

19. The method according to claim 11, **characterized in that** the second indication information comprises one or more of following conditions:
being in a serving cell where the multicast service can be received;
being in a serving cell where the first indication information or the second indication information is received;
a signal quality threshold for reception of the multicast service;
being in a serving cell, an uplink timing advance timer having not expired, and one or more configured grant being valid;
being in a serving cell, the uplink timing advance timer having not expired, and the serving cell configuring uplink resources for transmitting a Hybrid Automatic Repeat reQuest (HARQ) feedback.

20. An apparatus for sending a multicast service in an inactive state, **characterized by** comprising:
an indication information sending circuitry configured to send at least one of first indication information and second indication information, wherein the first indication information indicates receiving the multicast service in the inactive state, and the second indication information indicates a condition that requires to be met to receive the multicast service in the inactive state; and
a data sending circuitry configured to send data of the multicast service.

21. An apparatus for receiving a multicast service in an inactive state, **characterized by** comprising:
an indication information receiving circuitry configured to receive at least one of first indication information and second indication information, wherein the first indication information indicates receiving the multicast service in the inactive state, and the second indication information indicates a condition that requires to be met to receive the multicast service in the inactive state; and
a data receiving circuitry configured to receive data of the multicast service in the inactive state.

22. A computer readable storage medium having computer instructions stored therein, **characterized in that** when the computer instructions are executed by a processor, the method of any one of claims 1 to 10 or the method of any one of claims 11 to 19 is performed.

23. A network device, comprising a memory and a processor, **characterized in that** the memory has computer instructions stored therein, and when the processor executes the computer instructions, the method of any one of claims 1 to 10 is performed.

24. A terminal device, comprising a memory and a processor, **characterized in that** the memory has computer instructions stored therein, and when the processor executes the computer instructions, the method of any one of claims 11 to 19 is performed.
